# EUROPÄISCHE PATENTSCHRIFT

(11) **EP 3 312 059 B1**
(45) Veröffentlichungstag und Bekanntmachung des Hinweises auf die Patenterteilung: **02.01.2019**
(21) Anmeldenummer: 17001406.2
(22) Anmeldetag: 18.08.2017
(51) Int. Cl.: B60R 22/34, B60R 21/013, B60R 22/32

(54) **SICHERHEITSSYSTEM FÜR EIN MOTORRAD**
SAFETY SYSTEM FOR A MOTORCYCLE
SYSTÈME DE SÉCURITÉ POUR UN MOTOCYCLETTE

(30) Priorität: 21.10.2016 DE 102016012572
(43) Veröffentlichungstag der Anmeldung: 25.04.2018
(73) Patentinhaber: Oppermann Automotive Webbing GmbH, 37574 Einbeck (DE)
(72) Erfinder: Finke, Pascal, 37586 Dassel (DE); Oppermann, Falk, 37586 Dassel (DE)
(74) Vertreter: Sobisch, Peter

(56) Entgegenhaltungen:
- EP-A2- 0 820 924
- DE-B3-102014 109 078
- US-A1- 2006 066 091
- US-B1- 8 783 722
- US-B1- 8 925 669

## Beschreibung

Die Erfindung bezieht sich auf ein Sicherheitssystem entsprechend dem Oberbegriff des Anspruchs 1.

Zur Verbesserung der Sicherheit im Straßenverkehr, insbesondere zur Minderung der Verletzungsfolgen von Unfällen aufgrund beispielsweise von Kollisionen mit anderen Verkehrsteilnehmern oder sonstigen Hindernissen sind Fahrzeugsicherheitsgurte, regelmäßig in Kombination mit Airbagsystemen heute als Standard anzusehen, zumindest soweit es um Personenkraftfahrzeuge geht. Durch die Sicherheitsgurte wird hierbei eine Rückhaltefunktion auf die zu schützende Person ausgeübt, so dass diese jedenfalls keinen unkontrollierten unfallbedingten Bewegungen unterliegt, wobei durch die Airbagsysteme Aufprallenergie zumindest teilweise absorbiert werden soll, um Verletzungsgefahren so gering wie möglich zu halten. Obgleich schwere Unfälle im Straßenverkehr für Motorradfahrer mit im Vergleich zu den Insassen eines Personenkraftwagens erheblicheren Verletzungsgefahren einhergehen, finden sich bisher - von der Schutzhelmpflicht abgesehen - kaum Aktivitäten gesetzgeberischer Art zur Verbesserung dieser Situation.

Bekannt als Schutzsysteme für Motorradfahrer sind beispielsweise Airbagwesten, welche sensorgesteuert im Fall beispielsweise eines Auffahrunfalls expandieren und einen Teil des Körpers kissenartig schützen. Es handelt sich hierbei jedoch nur um einen außerordentlich begrenzten Schutz, der nur den Körperteilen gilt, der von dieser Spezialbekleidung abgedeckt ist. Ein weiterer Nachteil ist der geringe Tragekomfort für die jeweiligen Nutzer, ein Umstand, der geeignet ist, die Akzeptanz seitens der Verkehrsteilnehmer zu beeinträchtigen.

Aus der DE 103 17 439 A1 ist ein Sicherheitssystem für ein Motorrad bekannt, bei welchem ein im Bereich des Lenkers angebrachter Airbag mit einem Rückhaltegurt kombiniert ist, der an seinem einen Ende an der Sitzbank des Motorrads angebracht ist und dessen anderes Ende an dem Motorradanzug des Fahrers befestigt ist und auf diese Weise eine Rückhaltefunktion ausüben soll. Über eine Crashsensorik wird eine Unfallsituation erkannt, welche den Airbag auslöst, wobei in diesem Fall der Rückhaltegurt nach Eintritt des Crashfalls und einer Absorption kinetischer Energie zeitlich verzögert ausgelöst wird. Hierbei wird somit davon ausgegangen, dass der Motorradfahrer während einer ersten Phase des Crashfalls durch den Rückhaltegurt noch an dem Motorrad gehalten wird und dass diese Verbindung erst in einer zweiten Phase gelöst wird. Durch die Energieabsorption während der ersten Phase soll die passive Sicherheit des Fahrers erhöht werden. Problematisch bleibt hierbei jedoch, dass der Schutz des Fahrers in Anbtracht der Vielzahl der möglichen Bewegungsabläufe bei Unfällen unvollkommen ist.

Aus der US 2006/0066091 A1 ist ein Sicherheitssystem für ein Motorrad bekannt, bei welchem ein, in einem Crashfall eine Rückhaltefunktion auf den Fahrer ausübender Gurt vorgesehen ist, der über eine zentrale Verriegelungseinheit mit einem zum Erkennen eines eine Unfallgefahr anzueigenden Bewegungszustands des Motorrades signalisierenden Sensorsystem und motorradseitig ferner mit einem Retraktor im Verbindung steht. Die Verriegelungseinheit ist zur Verarbeitung der über das Sensorsystem übermittelten Daten und zur Generierung einer crashfallbedingten Lösung des Gurtes eingerichtet. Bei diesem bekannten Sicherheitsystem werden die unterschiedlichen Fallkonstellationen eines Unfalls nur teilweise beachtet.

Aus dem US 8 925 669 B1 ist ein weiteres Sicherheitssystem für Motorräder bekannt, bei welchem jeweils dem Fahrersitz und dem Beifahrersitz ein aus zwei Teilen zusammengesetzter Sicherheitsgurt zugeordnet ist.Techniken, welche ein unfallbedingtes Lösen der Gurte betreffen, sind in dieser Druckschrift nicht offenbart.

Es ist vor diesem Hintergrund die Aufgabe der Erfindung, ein Sicherheitssystem der eingangs bezeichneten Art unter Wahrung größtmöglichen Komforts für den Nutzer mit Hinblick auf einen weitergehenderen Schutz zu verbessern. Gelöst ist diese Aufgabe bei einem solchen Sicherheitssystem durch die Merkmale des Kennzeichnungsteils des Anspruchs 1.

Erfindungswesentlich ist hiernach eine zentrale Verriegelungseinheit, welche mit einem, den Bewegungszustand des Motorrades erfassenden Sensorsystem in Verbindung steht, wobei dieser Bewegungszustand durch eine in die Struktur der Verriegelungseinheit integrierte Rechnereinheit analysiert und wobei das Ergebnis dieser Analyse zur selektiven Lösung eines Eingriffs der auf den Fahrer zunächst eine Rückhaltefunktion ausübenden wenigstens zwei Gurte benutzt wird. In jedem Fall wird ein Lösen des Eingriffs nach Eintritt eines Crashfalls zeitlich verzögert eingeleitet, um zumindest einen beträchtlichen Anteil der kinetischen Energie des Fahrers vorab zu absorbieren. Von der Art des Crashfalls abhängig, genannt seien an dieser Stelle lediglich beispielhaft die an sich bekannten Fälle eines "Lowsider", eines "Highsider" oder eines "Frontalzusammenstoßes" werden alle Gurte entweder gleichzeitig oder nacheinander gelöst. Hierbei sind mindestens zwei Gurte vorgesehen.

Grundsätzlich ist kann lediglich der Fahrersitz des Motorrades mit einem vorstehend beschriebenen Sicherheitssystem ausgerüstet sein. In weiterer Ausgestaltung des Erfindungsgedankens kann jedoch jeder Sitz des Motorrades mit diesem System ausgerüstst sein.

Die zentrale Verriegelungseinheit ist dahingehend eingerichtet, dass in Abhängigkeit von der Datenkonstellation der durch das Sensorsystem generierten Daten Steuersignale erzeugt werden, welche eine bestimmte Abwurfsequenz der Gurte beschreiben. Das dem zugrundeliegende Ziel besteht in jedem Fall darin, nach Abschluss der Energieabsorption Verletzungsgefahren des Fahrers bedingt durch unkontrollierbare Bewegungen des Motorrades, durch eine auf den Fahrer ausgeübte Mitnahmewirkung des Motorrades oder durch Kollision mit einem anderen Fahrzeug oder sonstigen erkannten Hindernis zumindest zu vermindern. Zu diesem Zweck wird ein Abwurf des Fahrers angestrebt, der diesen sowohl von dem Motorrad als auch dem sonstigen, mögliche Verletzungsgefahren mit sich bringenden Objekt entfernt. Die zentrale Verriegelungseinheit ist somit mit Mitteln ausgerüstet, die eine in diesem Sinne nach einer definierten Abwurfsequenz abzuwickelnde Lösung der Gurte ermöglichen. Einer Anordnung von mehr als zwei Gurten, z. B. vier Gurten wird der Vorzug gegeben, insbesondere mit Hinblick auf eine Beeinflussung der Richtung eines Abwurfs des Fahrers.

Die zum zeitlich gesteuerten Lösen der Gurte bestimmten Antriebe entsprechend den Merkmalen des Anspruchs 2 sind vorzugsweise elektrischer Art, so dass die zentrale Verriegelungseinheit insoweit zur Energieversorgung mit dem Bordnetz des Motorrades in Verbindung steht. Wesentlich ist, dass diese Antriebe individuell ansteuerbar sind, um die genannte Abwurfsequenz darstellen zu können.

Die Merkmale der Ansprüche 3 und 4 sind auf eine Konkretisierung des Sensorsystems gerichtet. Soweit die an dieser Stelle eingesetzten Sensoren die für eine hinreichende Beschreibung des Bewegungszustands des Motorrades erforderlichen Werte zuverlässig erfassen, sind alle, dem Fachmann bekannten, diese Funktion erfüllenden Sensortypen einsetzbar, und zwar unabhängig von dem ihnen jeweils zugrundeliegenden physikalischen Wirkungsprinzip. Zu erfassen sind hierbei neben Informationen hinsichtlich der Bodenhaftung der Räder, insbesondere hinsichtlich eines Rollens oder Gleitens auf der Fahrbahn, der Neigung des Motorrades einschließlich der Richtung der Neigung, beispielsweise in einer Querebene zur Längserstreckung, sowie Beschleunigungswerte, von denen ein Kollisionszustand ableitbar ist. Wesentlich für die Eignung eines Sensortyps in diesem Zusammenhang ist eine schnelle Messwertbildung, um die Fähigkeit zur Reaktion des Sicherungssystems in der kurzen, in einem Crashfall zur Verfügung stehenden Zeitspanne technisch darstellen zu können.

Gemäß den Merkmalen des Anspruchs 5 ist die Verriegelungseinheit mit einer Schnittstelle zur Anbindung an eine Satellitenortung ausgerüstet. Dies eröffnet in Verbindung mit einem automatisch generierten Notrufsignal die Möglichkeit einer genauen Standortbestimmung sowie gegebenenfalls eine Einleitung von Rettungsmaßnahmen.

Gemäß den Merkmalen des Anspruchs 6 ist die Verriegelungseinheit mit einer Schnittstelle zur Anbindung an ein öffentliches Telekommunikationsnetz versehen. Dies bringt in Verbindung mit einer Satellitenortung, beispielsweise über GPS in einem Notfall eine weiter verbesserte Kommunikationsmöglichkeit mit sich, welche zu Minderung von Crashfallfolgen, insbesondere zur Aktivierung von Hilfsdiensten nutzbar ist.

Gemäß den Merkmalen des Anspruchs 7 ist die Verriegelungseinheit ferner mit einer Schnittstelle zur Anbindung an eine Steuerungseinrichtung des Motorrades versehen. Diese Maßnahme eröffnet die Möglichkeit, sämtliche Betriebs- und Bewegungsdaten des Motorrades, wie z. B. Geschwindigkeit, Lenkereinschlag, Bremsdruck usw. vor einem Crashfall zu speichern, so dass sich gegebenenfalls für eine Versicherung bzw. die Polizei Rückschlüsse auf eine mögliche Unfallursache ergeben.

Die Verriegelungseinheit ist entsprechend den Merkmalen des Anspruchs 8 mit einer manuell zu betätigenden Schalteinrichtung zum Entriegeln sämtlicher mit dieser in einem Eingriff stehender Gurte versehen. Die konstruktive Ausbildung dieser Schalteinrichtung kann beliebig sein.

Die Verriegelungseinheit ist entsprechend den Merkmalen des Anspruchs 9 derart eingerichtet, dass in einem Crashfall sämtliche Retraktoren in einem Blockierzustand gehalten sind. Diese Maßnahme dient der Vermeidung von Verletzungsrisiken, die ansonsten im Falle eines automatisch generierten Rückzugs der Retraktoren infolge der sich an den Enden der Gurte befindlichen Metallzungen entstehen könnten.

Man erkennt, dass mit dem erfindungsgemäßen Sicherheitssystem ein beträchtlicher Fortschritt für die Fahrsicherheit von Motorradfahrern, insbesondere eine Minderung schwerer Verletzungen geben ist.

Die Erfindung wird im Folgenden unter Bezugnahme auf die beiliegenden Zeichnungen näher erläutert werden. Es zeigen:

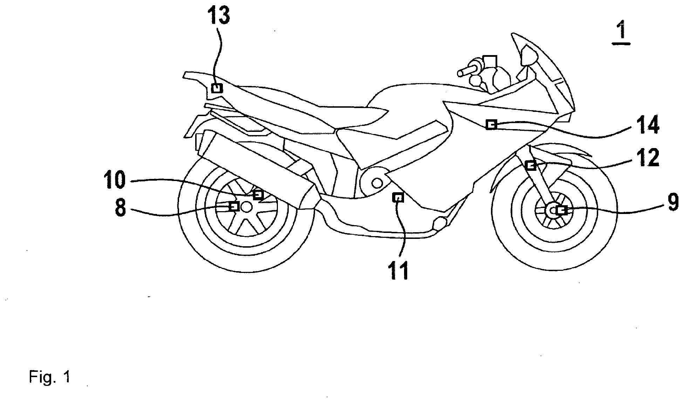

- Fig. 1: eine seitliche rechtsseitige Ansicht eines erfindungsgemäß ausgerüsteten Motorrades;

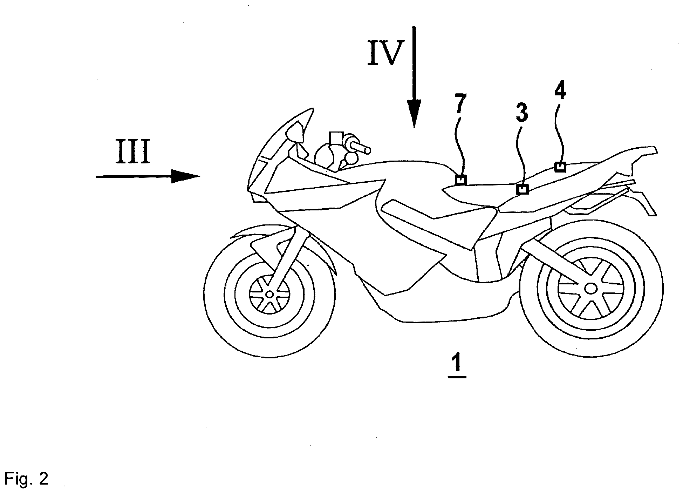

- Fig. 2: eine seitliche linksseitige Ansicht eines erfindungsgemäß ausgerüsteten Motorrades;

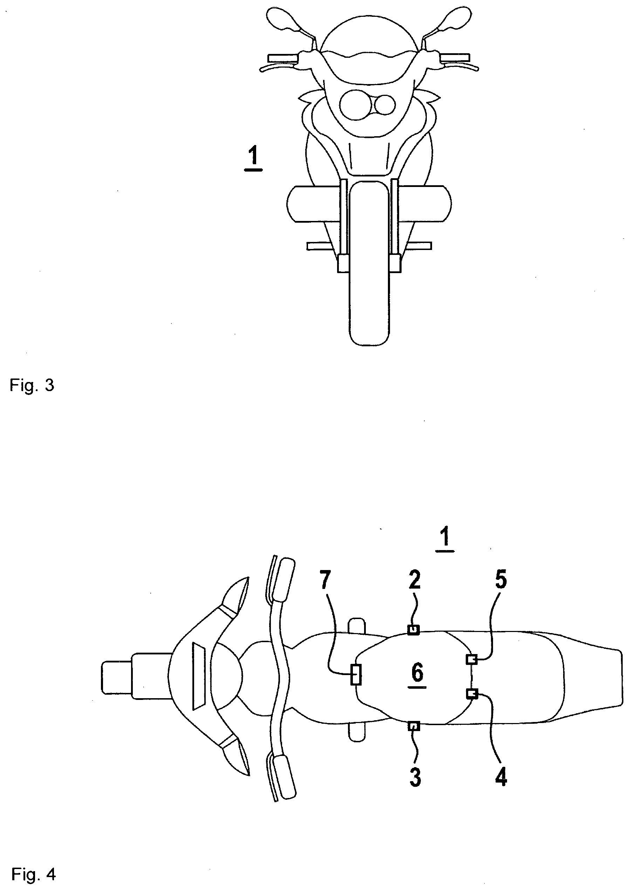

- Fig. 3: eine vorderseitige Ansicht entsprechend einer Blickrichtung III der Fig. 2
- Fig. 4: eine Draufsicht entsprechend einer Blickrichtung IV der Fig. 2.

Mit 1 ist in den Zeichnungsfiguren ein herkömmliches Motorrad in seiner Gesamtheit bezeichnet, welches mit einem erfindungsgemäßen Sicherungssystem ausgerüstet ist.

Das eingesetzte Gurtsystem besteht aus einem rechtsseitigen und einem linksseitigen Beckengurt, deren eine Enden jeweils über rechts- und linksseitig des Fahrersitzes 6 angebrachte Retraktoren 2, 3 mit dem Motorrad 1 in Verbindung stehen. Es sind ferner rechts- und linksseitige Schultergurte vorgesehen, deren jeweilige eine Enden über rückseitig bezüglich des Fahrersitzes 6 angebrachte Retraktoren 4, 5 mit dem Motorrad 1 in Verbindung stehen.

Die den Retraktoren 2, 3, 4, 5 abgekehrten Enden der Gurte sind in an sich bekannter Weise mit Metallzungen versehen, die zum Einstecken in eine zentrale Verriegelungseinheit 7 eingerichtet sind. Jeder der Gurte ist aktiviert, sobald der Fahrer diesen angelegt hat und dessen Metallzunge in einen Eingriff mit der Verriegelungseinheit 7 gebracht hat.

Die Verriegelungseinheit 7 wird über eine Steckverbindung an dem Motorrad 1 gehalten. Diese Steckverbindung umfasst ferner eine elektrische Verbindung, welche zur Energie- und Datenübertragung eingerichtet ist, worauf im Folgenden noch näher eingegangen werden wird.

Als Retraktor in diesem Sinne ist jede an sich bekannte Einrichtung zu verstehen, die dazu bestimmt ist, ein automatisches Aufwickeln eines Gurtes nach erfolgtem Lösen dessen Metallzunge von der Verriegelungseinheit 7, eine hinreichende Spannung unter Anlage an dem Körper des Fahres aufrecht zu erhalten, ohne dessen Bewegungsfähigkeit übermäßig zu beschränken und zusammen mit der Verriegelungseinheit 7 eine Rückhaltefunktion auf den Fahrer in einem Crashfall auszuüben.

Das erfindungsgemäße Sicherheitssystem umfasst eine Anordnung von Sensoren, über welche der Fahrzustand des Motorrades überwacht wird, insbesondere die Bodenhaftung der Räder, die Geschwindigkeit, die Neigung des Motorrades usw.. Diese Sensoren stehen mit der Verriegelungseinheit 7 in Verbindung, welche eine CPU enthält, welche zur Verarbeitung der von den Sensoren empfangenen, Bewegungsparameter beschreibenden Signale sowie zur Generierung von Steuersignalen zur Lösung des Eingriffszustands der Metallzungen mit der Verriegelungseinheit 7 nach Maßgabe eines festgestellten Bewegungszustands des Motorrads eingerichtet ist. Hierauf wird im Folgenden noch näher eingegangen werden.

Es handelt sich bei den Sensoren im Einzelnen um zwei Sensoren 8, 9 zur Feststellung des Traktionszustands der beiden Räder, über welche beispielsweise neben deren Drehzahl ein Abrollen auf der Fahrbahn oder ein teilweises oder beginnendes Gleiten festgestellt wird.

Es handelt sich ferner um drei Sensoren 10, 11, 12, über welche ein Aufprall, insbesondere eine Kollision mit einem anderen Verkehrsteilnehmer festgestellt wird. Diese Sensoren sind somit zur Messung von Beschleunigungen in definierten Richtungen eingerichtet.
Es handelt sich schließlich um zwei Sensoren 13, 14, über welche Neigungen des Motorrades 1 gegenüber definierten Ausgangslagen, insbesondere Neigungsbewegungen in definierten Ebenen relativ zu dem Motorrad 1 festgestellt werden.

Anhand der auf diesem Wege gewonnenen Daten über den Fahr- bzw. Bewegungszustand des Motorrades 1 sind abnormale Zustände, insbesondere Unfallsituationen erkennbar, wobei erfindungsgemäß die über die CPU der Verriegelungseinheit 7 generierten, auf ein Lösen des Eingriffs der Metallzungen gerichteten Signale nach Maßgabe der Art des festgestellten Bewegungszustands und nach einem zeitlichen Ablauf erfolgen, dessen Ziel es ist, Schadwirkungen auf den Fahrer, insbesondere Verletzungsgefahren so gering wie möglich zu halten.

### Bezugszeichenliste:

1. Motorrad
2. Retraktor
3. Retraktor
4. Retraktor
5. Retraktor
6. Fahrersitz
7. Verriegelungseinheit
8. Sensor
9. Sensor
10. Sensor
11. Sensor
12. Sensor
13. Sensor
14. Sensor

## Patentansprüche

1. Sicherheitssystem für ein Motorrad (1), bestehend aus einer Anordnung von mindestens einem, zur Ausübung einer zeitlich begrenzten Rückhaltefunktion auf den Fahrer in einem Crashfall eingerichteten und angeordneten, motorradseitig durch einen Retraktor (2, 3, 4, 5) sowie einer zentralen Verriegelungseinheit (7) lösbar fixierbaren Gurt, und einem, zum Erkennen eines abnormalen, eine Unfallgefahr indizierenden Bewegungszustand des Motorrades (1) signalisierenden Sensorsystem, **gekennzeichnet durch** wenigstens zwei, an ihren einen Enden, nämlich motorradseitig durch Retraktoren (2, 3, 4, 5) und an ihren dem entgegengesetzten Enden in der zentralen Verriegelungseinheit (7) lösbar fixierbaren Gurten, wobei die Sensoren (8, 9, 10, 11, 12, 13, 14) des Sensorsystems mit der Verriegelungseinheit (7) in Verbindung stehen, wobei die Verriegelungseinheit (7) zur Verarbeitung der über die Sensoren empfangenen, den Bewegungszustand des Motorrades (1) beschreibenden Daten eingerichtet ist, und wobei die Verriegelungseinheit (7) zur Generierung von zeitlich verzögerten, auf eine selektive, crashfallbedingte Lösung des Eingriffs der Gurte mit der Verriegelungseinheit (7) gerichteten Steuersignalen eingerichtet ist, und zwar nach Maßgabe der empfangenen Datenkonstellation der Sensoren (8, 9, 10, 11, 12, 13, 14), nämlich mit der Vorgabe einer definierten, von den Daten, insbesondere deren zeitlicher Folge abhängigen Reihenfolge des Lösens der Gurte beschreibenden Abwurfsequenz.

2. Sicherheitssystem nach Anspruch 1, **dadurch gekennzeichnet, dass** die Verriegelungseinheit (7) mit Antrieben zum individuellen Lösen des Eingriffszustands der Gurte versehen ist.

3. Sicherheitssystem nach Anspruch 1 oder 2, **dadurch gekennzeichnet, dass** das Sensorsystem zumindest Sensoren (8, 9, 10, 11, 12, 13, 14) zur Erfassung des Traktionsverhaltens der Räder des Motorrads (1), der Neigung des Motorrades (1) sowie zur Erkennung einer Kollision umfasst.

4. Sicherheitssystem nach einem der Ansprüche 1 bis 3, **dadurch gekennzeichnet, dass** die Sensoren (8, 9, 10, 11, 12, 13, 14) des Sensorsystems zur Erfassung der Richtung einer Kollision eingerichtet sind.

5. Sicherheitssystem nach einem der Ansprüche 1 bis 4, **dadurch gekennzeichnet, dass** die Verriegelungseinheit (7) mit einer Schnittstelle zur Anbindung an eine Satellitenortung versehen ist.

6. Sicherheitssystem nach Anspruch 5, **dadurch gekennzeichnet, dass** die Verriegelungseinheit (7) mit einer Schnittstelle zur Anbindung an ein öffentliches Telekommunikationsnetz versehen ist.

7. Sicherheitssystem nach einem der Ansprüche 1 bis 6, **dadurch gekennzeichnet, dass** die Verriegelungseinheit (7) mit einer Schnittstelle zur Anbindung an eine Steuerungseinrichtung des Motorrades (1) versehen ist.

8. Sicherheitssystem nach einem der Ansprüche 1 bis 7, **dadurch gekennzeichnet, dass** die Verriegelungseinheit (7) mit einer manuell zu betätigenden Schalteinrichtung zum Entriegeln sämtlicher mit dieser in Verbindung stehender Gurte versehen ist.

9. Sicherheitssystem nach einem der Ansprüche 1 bis 8, **dadurch gekennzeichnet, dass** in einem Crashfall sämtliche Retraktoren (2, 3, 4, 5) in einem Blockierzustand gehalten sind.

## Claims

1. Safety system for a motor cycle (1), consisting of an arrangement of at least one belt, which is designed and arranged to exert a time-limited restraining function on the rider in the event of a crash and can be releasably fixed to the motor cycle by a retractor (2, 3, 4, 5) and a central locking unit (7), and of a sensor system emitting signals for recognition of an abnormal movement state of the motor cycle (1) indicative of the risk of an accident, **characterised by** at least two belts which can be releasably fixed at one of their ends, namely at the motor cycle ends, by retractors (2, 3, 4, 5) and at their ends opposite thereto in the central locking unit (7), wherein the sensors (8, 9, 10, 11, 12, 13, 14) of the sensor system are connected to the locking unit (7), wherein the locking unit (7) is designed for processing the data receiveed via the sensors and describing the movement state of the motor cycle (1), and wherein the locking unit (7) is designed for generation of time-delayed control signals having the purpose of a selective crash-imposed release of the engagement of the belts with the locking unit (7), in particular according to the stipulation of the received data combination of the sensors (8, 9, 10, 11, 12, 13, 14), namely with the requirement of a defined order - dependent upon the data, especially the time sequence thereof - of the ejection sequence describing release of the belts.

2. Safety system as claimed in claim 1, **characterised in that** the locking unit (7) is provided with drives for individual release of the engagement state of the belts.

3. Safety system as claimed in claim 1 or 2, **characterised in that** the sensor system comprises at least sensors (8, 9, 10, 11, 12, 13, 14) for detection of the traction behaviour of the wheels of the motor cycle (1), the inclnation of the motor cycle (1) and for recognising a collision.

4. Safety system as claimed in any one of claims 1 to 3, **characterised in that** the sensors (8, 9, 10, 11, 12, 13, 14) of the sensor system are arranged for detection of the direction of a collision.

5. Safety system as claimed in any one of claims 1 to 4, **characterised in that** the locking unit (7) is provided with an interface for connection to a satelliten positioning system.

6. Safety system as claimed in claim 5, **characterised in that** the locking unit (7) is provided with an interface for connection to a public telecommunications network.

7. Safety system as claimed in any one of claims 1 to 6, **characterised in that** the locking unit (7) is provided with an interface for connection to a control device of the motor cycle (1).

8. Safety system as claimed in any one of claims 1 to 7 **characterised in that** the locking unit (7) is provided with a manually-operated switching device for unlocking all the belts connected thereto.

9. Safety system as claimed in any one of claims 1 to 8, **characterised in that** in the event of a crash, all the retractors (2, 3, 4, 5) are kept in a blocking state.

## Revendications

1. Système de sécurité pour une motocyclette (1), constitué d'un ensemble d'au moins une ceinture mise au point et disposée pour exercer une fonction de retenue limitée dans le temps sur le conducteur dans le cas d'une collision et pouvant être fixée de manière amovible côté motocyclette par un rétracteur (2, 3, 4, 5) ainsi que par une unité de verrouillage (7) centrale et d'un système de capteurs signalant un état de déplacement anormal, indiquant un risque d'accident, de la motocyclette (1), **caractérisé par** au moins deux ceintures pouvant être fixées de manière amovible au niveau d'une de leurs extrémités, à savoir côté motocyclette, par des rétracteurs (2, 3, 4, 5) et au niveau de leurs extrémités opposées dans l'unité de verrouillage (7) centrale, dans lequel les capteurs (8, 9, 10, 11, 12, 13, 14) du système de capteurs sont reliés à l'unité de verrouillage (7), dans lequel l'unité de verrouillage (7) est mise au point pour traiter les données reçues par l'intermédiaire des capteurs, décrivant l'état de déplacement de la motocyclette (1), et dans lequel l'unité de verrouillage (7) est mise au point pour générer des signaux de commande retardés dans le temps, axés sur un déclenchement sélectif, lié à un cas de collision, du recours aux ceintures avec l'unité de verrouillage (7), et à savoir conformément à la constellation de données reçue des capteurs (8, 9, 10, 11, 12, 13, 14), à savoir en supposant une séquence de lancement définie décrivant l'ordre de déclenchement des ceintures en fonction des données, en particulier de leur succession dans le temps.

2. Système de sécurité selon la revendication 1, **caractérisé en ce que** l'unité de verrouillage (7) est pourvue d'entraînements servant à déclencher individuellement l'état de recours des ceintures.

3. Système de sécurité selon la revendication 1 ou 2, **caractérisé en ce que** le système de capteurs comprend au moins des capteurs (8, 9, 10, 11, 12, 13, 14) servant à détecter le comportement en traction des roues de la motocyclette (1), l'inclinaison de la motocyclette (1) et servant à identifier une collision.

4. Système de sécurité selon l'une quelconque des revendications 1 à 3, **caractérisé en ce que** les capteurs (8, 9, 10, 11, 12, 13, 14) du système de capteurs sont mis au point pour détecter la direction d'une collision.

5. Système de sécurité selon l'une quelconque des revendications 1 à 4, **caractérisé en ce que** l'unité de verrouillage (7) est pourvue d'une interface destinée à être rattachée à une localisation par satellite.

6. Système de sécurité selon la revendication 5, **caractérisé en ce que** l'unité de verrouillage (7) est pourvue d'une interface destinée à être rattachée à un réseau de télécommunication public.

7. Système de sécurité selon l'une quelconque des revendications 1 à 6, **caractérisé en ce que** l'unité de verrouillage (7) est pourvue d'une interface destinée à être rattachée à un dispositif de commande de la motocyclette (1).

8. Système de sécurité selon l'une quelconque des revendications 1 à 7, **caractérisé en ce que** l'unité de verrouillage (7) est pourvue d'un dispositif de commutation à actionner manuellement servant à déverrouiller toutes les ceintures reliées à ce dernier.

9. Système de sécurité selon l'une quelconque des revendications 1 à 8, **caractérisé en ce que** tous les rétracteurs (2, 3, 4, 5) sont maintenus dans un état de blocage en cas de collision.
